# EUROPEAN PATENT APPLICATION

(11) **EP 1 560 402 A1**
(43) Date of publication of application: **03.08.2005**
(21) Application number: 04002154.5
(22) Date of filing: 30.01.2004
(51) Int. Cl.: H04M 1/2745, H04M 1/725, H04L 29/08

(54) **Communications robot**

(71) Applicant: Web.De AG, 76227 Karlsruhe (DE)
(72) Inventor: Cotte, Pierre-Alain, 76227 Karlsruhe (DE); Greve, Michael, 76227 Karlsruhe (DE)
(74) Representative: Schnekenbühl, Robert Matthias L.

(57) **Abstract**

The present invention provides a method and a system wherein communications parameters are defined under control of a communications offering entity, the communications parameters are implemented in a communications offering means, the communications offering means is assigned to a target entity, at least a part of the communications offering means is provided to the target entity, and a communications offer is provided by the communications offering means to the target entity to communicate according to the communications parameters.

## Description

### Field of the invention

The present invention generally relates to communications methods and systems and particularly relates to a method and a system providing communications offers and capabilities in line with predefined communications parameters.

### Background of the invention

The field of communications undergoes rapid developments, particularly as regards increasingly enhanced technologies, different types of communications and increasing extent. However, there is often a mismatch between, on the one hand, expectations of users (e.g. user friendliness, tailored for communicating parties) and, on the other hand, properties of existing communications environments. Particularly in the field of Internet based or Internet related communications, users ("calling" and "called" parties) are constantly required to operate complex, which, in contrast to their stage of development from a technical point of view, have to be operated in rather user unfriendly manner. For example, the number and complexity of steps, which have to be carried out by a user to communicate via the Internet, are generally more complicated as compared with communications by means of a conventional telephone.

As a result, capabilities of communications environments are not fully made use of. This is in contrast to a constantly increasing demand for more and enhanced communications.

In order to support users in Internet based or Internet related communications, it is known to employ so-called "call me" and "contact" buttons included in web pages or e-mails. A user can activate such a button, for example by clicking the button, to establish a communications link to an owner of a web page or a sender of an e-mail. Upon activation of such a button, the user is required to input some information to actually establish a communications link, for example, his/her telephone number, a telephone number of a party to be called, personal information and the like.

It is further known to transmit, e.g. as attachment to an e-mail, a software applet, which upon receipt by a computer system is installed on that computer system. The software applet can be activated by a user to establish a telephone communications link between a telephone of the user and a predefined telephone or a telephone selected by the user. In any case, the user is required to input some information, to use the telecommunications capabilities of the software applet.

A problem generally related to all known approaches is that a user must become active to initialize communications. However, users often forget to do so, for example, miss to call a friend in certain circumstances such as a birthday, ignore a scheduled business related call etc. Further, users are often deterred to use communications possibilities due to related costs and due to missing information to indicate a party with which communications are desired.

In order to avoid that a user forgets to communicate it is possible to remind the user by any mean, for example, a letter, an e-mail or a telephone call. Nevertheless, the user is still required to remind communicating, to know information to establish a respective communications link and has to pay for the communications. A further disadvantage of known approaches is that a person, from whom communications shall originate, is generally required to know the party to be called or at least, information associated thereto, such as a telephone number. Further, a party sometimes wants to be contacted by another party without presenting detailed information, such as a telephone number, to the other party.

A further problem most known approaches suffer from is that communications means (e.g. user hardware, user software, user interfaces) are designed for a plurality of different users in general manner. As a result, individual requirements and preferences of users as well as the individuality of users as such are not taken into consideration.

### Object of the invention

In general, it is an object of the present invention to overcome the disadvantages existing in known communications. Particularly, the present invention aims at solutions, which enhance capabilities of communications technologies in order to support users in communicating in an improved user friendly, more comfortable and easier manner and which consider personal and individual aspects of users as regards both "calling" and "called" communications.

### Short description of the invention

The method according to the present invention comprises defining communications parameters under control of a communications offering entity, implementing the communications parameters in a communications offering means, assigning the communications offering means to a target entity, providing at least a part of the communications offering means to the target entity, and providing, by the communications offering means, a communications offer to the target entity to communicate according to the communications parameters.

In this context, entities are contemplated to include users or owners (e.g. a single person, a company) of communications systems (e. g. computer systems, Internet servers, service providers, e-mail servers, telephone systems, SMS systems), addresses (e.g. IP addresses, telephone numbers, e-mail addresses, websites, Internet links, SMS addresses, postal addresses), locations (e. g. building of a company), end user units (e. g. personal computer, telephones, SMS devices) etc. Preferably, an entity is an individual, a group of individuals or a company, to which at least one end user unit is associated to.

The communications offering entity can be, for example, a company or an individual that wants to offer, enable and/or remind an entity, such as a person, to communicate. The target entity can be, e.g., a company or an individual of a group of individuals or companies that is/are, from the communications offering entity's point of view, a "target" or desired party, which should be allowed to communicate but within a framework set up by the communications offering entity, i.e. as defined in the communications parameters.

Examples for end user units include any device, unit or means, which can be used for communications. Preferred end user units comprise stationary and mobile telephones (e.g. PSTN telephones, 2G and 3G devices, GSM and UMTS telephones), stationary and mobile computer systems, devices and units and the like providing data/information sending and/or receiving capabilities for communications purposes.

Further, it is contemplated that communications provided to the target entity can be accomplished via any communications network such as regular telephone networks, mobile communications networks, computer networks, radio transmission networks, the Internet, etc.

Communications parameters comprise any type of parameter, which can be used to carry out communications. The communications parameters preferably include at least one of the following:
- An identification of the communications offering entity (e. g. name, postal address, e-mail address, IP address etc.),
- an identification of the target entity (e. g. name, postal address, e-mail address, IP address etc.),
- an authorization of the target entity to communicate in response to the communications offer,
- a definition of at least one communications link to be used for communications in response to the communications offer (e. g. an Internet communications link, a telephone link etc.),
- at least one communications network to be used for communications in response to the communications offer (e. g. the Internet, a telephone network etc),
- at least one point of time at which the communications offer is provided (e. g. Monday morning, 11 O' clock, birthday of a user to the target entity etc.),
- at least one of a minimum number and a maximum number of communications offers to be provided to the target entity (e. g. a minimum of 4 telephone calls and/or SMS, a maximum of 18 telephone calls and/or SMS),
- at least one of a minimum duration and a maximum duration of communications accomplished in the response to the communications offer (e. g. telephone call and/or an Internet link of at least 2 minutes, telephone call and/or an Internet link of maximal 2 minutes etc. ),
- a definition of security requirements (e. g. communications in response to the communications offer require a password, communications in response to the communications offer are only possible by using a particular end user unit etc.),
- a definition of at least one point of time at which the communications offering means is to be activated (e .g. on the birthday of a user of the target entity etc.),
- a definition of at least one of a minimum number and a maximum number of activations of the communications offering means,
- a definition of an operational condition of the target entity for at least one of activating the communications offering means and providing the communications offer (e. g. the target entity is currently put into operation, operates for a given period, is communicating etc.),
- a definition of an operational condition of the communications offering entity for at least one of activating the communications offering means and providing the communications offer.

Preferably, the communications offering means is a software application, which is adapted to offer an entity intended by the communications offering entity, i.e. the target entity, communications in line with the communications parameters, that is the way and manner the communications offering entity wants the target entity to communicate. However, the communications offering means can be also embodied, for example, in form of an e-mail or an Internet link as long as the chosen embodiment is adapted to provide a communications offer according to the communications parameters.

The communications offering means can be embodied as "integrated" means (i.e. means provided as unit operated and/or located at a specific unit such as a computer system associated/comprised/forming the communications offering entity or the target entity) or as "composite" means (i.e. provided by separated components, units, devices, etc. and/or operated and/or located at different units, which in cooperation form the communications offering means). In the latter case, at least a component of the "composite" communications offering means is provided to the target entity , while an "integrated" communications offering means will be provided to the target entity as a whole.

Implementing the communications parameter in the communications offering means can be accomplished, for example, by generating a software application that incorporates the communications parameters or corresponding information. Thus, the communications offering means is preferred to include at least virtually all information about the communications offered by the communications offering entity.

From the time on the at least part of communications offering means is provided to the target entity, the communications offering means can provide a communications offer. How and/or when the communications offer is provided to the target entity is defined in the communications parameters. This applies also to the way and/or a manner the communications offer is provided. The communications offering means can, for example, provide the communications offer at a certain time (e.g. hour, day) and/or in relation to a predefined event (e.g. birthday, meeting, conference communications). The communications offering means can provide the communications offer in form of a button, icon or interactive portion of a graphical user interface, a (complex) video, an animated icon or button displaying a visual reminder or any measure, which indicates the target entity a possibility to communicate in line with the communications parameters.

Examples of the communications offering means in form of a button include:
- A beating heart reminding a lover being the target entity to call his/her loved one being the communications offering entity.
- An advertising film for a product asking a costumer being the target entity to be clicked, e.g. to be connected directly to a vendor being the communications offering entity and at the cost of the vendor.
- A picture of a grandmother being the communications offering entity wanting to be called by the grandchildren being the target entity, e.g. at her expenses.
- A conference button reminding a person being the target entity of a conference at a certain time, e.g. only available for that period at the expense of the company being the communications offering entity.
- A convenient button for a child being the target entity in vacation abroad to call the parents being the communications offering entity, e.g. at the cost of the parents.

Assigning the communications offering means to the target entity particularly indicates that the communications offering means is not generally provided to any entity but to a particular entity. Assigning the communications offering means to the target entity can be accomplished by providing, e.g., a software application to the target entity (e.g. embedded in an e-mail, web page etc. as descried below) and, more particularly, to an end user unit thereof etc. Although, preferred embodiments are related to Internet based communications offering means, any electronic means is contemplated as communications offering means, such as SMSs optionally with automatic reply, UMTS based means etc.

The communications offer has to be distinguished from actual communications. The communications offer indicates the target entity that communications are possible and further indicates communications possibilities in line with the communications parameters. For example, the communications offer can indicate that the target entity can establish communications, such as a telephone call, to the communications offering entity. Assuming a company being the communications offering entity wants to remind a customer being the target entity to contact the company or a representative thereof. The communications offering means indicates the customer, for example by displaying an icon, button or animated/highlighted portion of a graphical user interface, to establish communications to the company or its representative, respectively. However, it is also possible, that the communications offer indicate that the target entity can communicate with an entity being different from the communications offering entity. For example, the communications offer can indicate an individual being the target entity to communicate with any other individual but, for example, in contrast to a conventional telephone call, in the framework of the communications parameters, e.g. with a predefined number of called parties, for a predefined duration for each call, during a certain time, at the costs of the communications offering entity etc.

The communications offer is preferably selected such, i.e. the communications parameters are defined such, that the target entity is offered communications of which the target entity or an end user unit associated thereto, respectively, is capable. For example, the communications offer can comprise an offer for the target entity to communicate by using an e-mail, a telephone call, a SMS, a facsimile etc. if the target entity has access to and/or comprises an e-mail capable end user unit, a telephone, an SMS capable unit, a facsimile device etc. In case the target entity comprises different end user units, the communications offering means can ascertain to which end user unit the communications offer is to be provided (e.g. the only operated end user unit, the end user unit preferred by the target entity etc.). In line therewith, the way the communications offering means is provided can be selected accordingly.

In a preferred embodiment, the providing step includes transferring the at least part of the communications offering means to the target entity

This can be accomplished by transmitting, to the target entity, a software application or applet, an Internet link, an E-Mail, SMS or MMS e.g. including a link to download at least part of the communications offering means, an E-Mail or MMS e.g. including at least part of the communications offering means.

In a further preferred embodiment, the providing step includes installing the at least part of the communications offering means at the target entity.

Examples for this embodiment include:
- An e-mail or MMS comprising software, which forms the at least part of the communications offering means. Opening the e-mail or MMS results in an installation of the software at the target entity, e.g. on an end user unit associated therewith.
- An e-mail or MMS comprising software, which forms the at least part of the communications offering means. Opening the software or a data file comprising the software results in an installation of the software at the target entity, e.g. on an end user unit associated therewith.
- An e-mail comprising an Internet link. Opening the link causes a download of software, which forms the at least part of the communications offering means, to the target entity and an installation of the software at the target entity.
- An SMS or MMS comprising an link. Opening the link causes a download of software, which forms the at least part of the communications offering means, to the target entity and an installation of the software at the target entity.
- Software, which forms the at least part of the communications offering means, is transferred to the target entity in form of self executable software or a self-executable/extractable data file. Upon receipt of the software or the data file, installation at the target entity will be effected.
- "Direct" installation of the communications offering means by the communications offering entity at the target entity by using file sharing or application sharing.
- An E-mail, SMS or MMS comprising a link. The link remains in the E-mail / SMS / MMS and can be actuated there.
- An E-mail comprising a link. The link is copied by a user of the target entity and, for example, installed at a desktop of the target entity.
- An E-mail comprising a link. The link installs itself by opening the E-mail or opening the link on the desktop of the target entity.

In a further preferred embodiment, the providing step includes to put the communications offering means into an idle operational status.

In this context, the term "ideal operational status" indicates that the communications offering means is functioning as a background process of the target entity, which does not influence the operation of the target entity and which is not noticed by a user of a target entity. In particular, communications offering means being in an idle operational status does not operate to provide the communications offer. For example, putting the communications offering means into the idle operational status can be effected by starting an operation of the communications offering means in response to the target entity being put into operation such that the communications offering means is active in the "background".

However, the communications offering means being in the idle operational status may execute some functions. For example, the communications offering means can provide information to the communications offering entity with respect to the status of the target entity, for example, concerning communications activities currently performed by means of the target entity. Further, the communications offering means being in the idle operational status may be controlled by the communications offering entity as will be explained in greater detail below. For example, in case the communications offering means is provided in form of a graphical object displayed on a monitor of the target entity, control of the communications offering means being in the idle operational status by the communications offering entity can effect a change of the visual appearance of the communications offering means (e.g. the communications offering means can be controlled to waive).

In a further preferred embodiment, the at least part of the communications offering means is provided by means of an electronic message or by means of a portable data storage.

Examples for an electronic message include E-mails, SMSs, MMSs, electronic facsimiles and the like. Examples for portable data storage include chip or smart cards, CD-ROMs, DVD-ROMs, diskettes, prepaid telephone cards and the like.

In a further preferred embodiment, the at least part the communications offering means is provided in a manner uncontrolled by the target entity. This embodiment will be more readily understood with reference to the following description of preferred embodiments.

In a further preferred embodiment, the communications parameters are preferably varied by implementing varied communications parameters in the communications offering means.

This embodiment allows modifying the communications parameters (i.e. the predefined boundaries of the offered communications) without being required to use a further communications offering means in addition or replacing an existing communications offering means. As a result, the communications offering means remains assigned to the target entity but provides, e.g., the communications offer in line with the modified communications parameters and/or provides a different communications offer.

The communications parameters are preferably varied under control of the communications offering entity.

From the point of view of the communications offering entity, this embodiment is of particular interest because the communications offering entity as the party being responsible for the communications offer is enabled to modify, e.g. the functions and operation of the communications offering means, the type of offered communications (e.g. telephone call instead of SMS communications, communications with a different company or individual), the number of offered communications (e.g. additional 10 telephone calls or SMSs) etc.

Nevertheless, the communications parameters can also be altered by another entity being different from the communications offering entity. For example, the communications parameters can be modified by a communications provider (e.g. an e-mail provider, a telephone company, etc.), which is intended to be employed for offered communications (e.g. as indicated by the communications parameters). For example, such another entity can adapt the communications parameters such that, e.g., new or changed communications fees are considered or that offered communications, which originally are defined to take place via a specific network, will be carried out via a different network. In general, a modification of the communications parameters enhances the individual and personalized communications characteristics of the present invention existing anyhow.

The communications parameters are preferably varied when the communications offering means or at least a part thereof is already provided to the target entity.

This embodiment allows a modification of the communications parameters without being required to again assign a communications offering means to the target entity. As an example, the communications parameters can be altered by changing sources (e.g. data, software applications, hardware components), which will be used by the communications offering means for providing the communications offer. If the communications offering means is provided in form of a software application, the communications parameters can be varied by changing a so-called ".ini" file or data to be accessed by the communications offering means without any activation of the communications offering means. In case, for example, the communications offering means is embodied as an Internet link, the communications parameter can be varied by modifying the data and the like to which the Internet link points.

The communications offering means is preferably controlled when the at least part of communications offering means has been provided so as to control a current condition of the communications offering means.

Controlling the communications offering means can effect that the communications offering means provides, to the target entity and/or a user of the target entity, (visual and/or audio) information in order to, for example, indicate a current operational mode of the communications offering means and/or to attract attention (e. g. to display and/or to animate an icon [waving, blinking, jumping, singing etc.]).

As a further example, controlling the communications offering means can effect that the communications offering means provides the communications offer in a way and/or manner not being previously defined by the communications parameters. This allows, for example, to provide a communications offer not contemplated when the communications parameters have been defined or to provide a communications offer in response to a special situation or event (e.g. urgent communications to schedule a meeting).

Such a control of the communications offering means further improves the individual and personalized properties of the present invention.

Control of the communications offering means can be accomplished by using a control means associated to the communications offering entity.

Then, an individual adaptation can be initiated by the party being responsible for the communications offer, i.e. the communications offering entity in general the party that knows at best which communications (offer) will be optimal.

Control of the communications offering means can be carried out in dependence of at least one of an event related to the target entity and an event related to the communications offering entity.

Control of the communications offering means can be carried out in dependence of at least one of a condition of the target entity and a condition of the communications offering entity.

These embodiments are further steps towards individualized and personalized communications. If, for example, the target entity is a condition not suited for communications, it can be avoided to provide the communications offer. The same comparably applies to a condition of the communications offering entity. As further example, control of the communications offering means can depend on the operational mode of at least one of the communications offering entity and the target entity. If the communications offering entity or the target entity is already communicating, providing the communications offer could lead to technical conflicts and/or conflicts of interest. Refraining from provision of the communications offer in such a situation can be beneficial. However, providing of the communications offer can be desired if the target entity is already communicating. For example, the target entity communicates, e.g. via an Internet link, with a first company that is a competitor of a second company being the communications offering entity. Then, a communications offer can be provided to offer the target entity to communicate with the communications offering entity, i.e. the second company, in order to possibly change the target entity's mind which of the companies to consider. Provision of the communications offer can be also desired if the communications offering entity is already communicating. For example, the communications offering entity can be involved in communications with a third party about an issue in which the target entity might be interested or which could have some impact on the target entity. Then, a communications offer can be provided to include the target entity in the communications already prevailing, e.g. in form of a conference communications.

It is further preferred that the communications offer is provided in dependence of at least one of a condition of the target entity and a condition of the communications offering entity.

This embodiment additionally enhances the individualized and personalized communications properties of the present invention. As set forth above, the communications offer can occur, according to the communications parameters or an external control, at any time. Then, situations comparable to those discussed with respect to the preceding embodiment can exist and the provision of the communications offer can be optimized in view of conditions of the communications offering entity and the target entity.

Assuming, the communications offering entity has defined, in the communications parameters, that the target entity should be reminded to communicate with the communications offering entity at least once within two weeks. Then, a respective communications offering means is assigned to the target entity, wherein it is ascertained whether the communications offering entity and the target entity had communications within the last two week (e.g. by checking the telephone history of the communications offering entity and/or the target entity). If no communications have occurred in that period, the communications offering means reminds the target entity to communicate with the communications offering entity, i.e. provides a respective communications offer. Synchronization between the communications offering means and the communications offering entity and/or the target entity can be performed by means of a connection employed at specific times, in predefined intervals, in continuous manner etc.

A further example is a person or company being the communications offering entity that intends to offer, as a gift, five free SMSs and ten minutes of toll-free telephone communications to a friend or customer at specific event (e.g. his/her birthday). Then, the communications offering means is provided, in response to the specific event, the communications offer of five free SMSs and ten minutes of toll-free telephone communications.

In a further preferred embodiment, the communications offering means is synchronized with respect to at least one of a condition of the target entity and/or a condition of the communications offering entity.

Synchronization can be carried out so as to obtain an interdependency between the communications offering means and the communications offering entity and/or the target entity. If, e.g., the communications offering means is provided to the target entity such that the communications offering means or at least a portion thereof is located at the target entity, synchronization can effect that the communications offering entity is updated with respect to the operation of the communications offering means and vice versa. The same applies correspondingly, when the at least part of the communications offering means is located at the communications offering entity.

Preferably, the synchronization comprises the exchange of data, especially about information of the target entity to the communications offering identity. Such a synchronization can be carried out by exchanging data from the communications offering means to the communications offering entity directly or from the communications offering means to a data base, wherein the information is stored. Preferably, the update of information of such a data base is indicated and made known to the communications offering entity, for example by displaying a respective window showing the updated information. The communications offering entity might preferably be invited to decide on these updated data information to be maintained in the data base or neglect the update. Thus, the communications offering entity preferably has the choice to accept such updated data.

The communications offering means preferably provides information of a condition of the target entity to the communications offering entity and/or provides information of a condition of the communications offering entity to the target entity.

Information concerning the target entity and/or the communications offering entity can be provided at any time when the communications offering means has been at least partially provided to the target entity.

On the one hand, this embodiment enables the communications offering entity to more specifically take into consideration the target entity as "individual" communications party and, thus, to adapt, e.g. by a (re-)definition of the communications parameters, control of the communications offering means, synchronization etc. in individual and personalized manner with respect to the target entity. Further, this embodiment allows the communications offering entity to consider properties and/or a current status of the target entity, which are usually not available or which change in time.

For example, information concerning the target entity can include:
- Technical details of the target entity or an end user unit associated thereto in order to optimize the communications offer accordingly,
- operational conditions or modes of the target entity (e.g. operated vs. not operated, execution of software applications, communications activities etc.), and
- a history of the target entity (a history of the target entity can indicate when, how and with whom the target entity communicated).
- presence of the target entity (indicated by operational status information like keyboard input data detected, position of mouse cursor changing in time, etc.)

On the basis of the operational conditions, modes or a history of the target entity, the communications offering entity can individually adapt the communications parameters and/or the communications offering means and, thus, the communications offer.

On the other hand, this embodiment enables the target entity to take into consideration the target entity as "individual" communications party, For example, the target entity or a user thereof can adapt reactions to the communications offer, e.g., by accepting the communications offer only at specific periods of a day, a week etc. and/or in special operational modes of the communications offering entity and/or in view of a certain event/situation. It is further possible for the target entity to consider properties and/or a current status of the communications offering entity, which are usually not available or which change in time.

For example, information concerning the communications offering entity can include:
- Technical details of the communications offering entity or an end user unit associated thereto in order to optimize a response to the communications offer accordingly,
- operational conditions or modes of the communications offering entity (e.g. operated vs. not operated, execution of software applications, communications activities etc.), and
- a history of the communications offering entity (a history of the target entity can indicate when, how and with whom the target entity communicated).

Conditions of the communications offering entity and the target entity, respectively, contemplated by the present invention can further comprise conditions such as:
- The target entity is operated, at least one end user unit associated to the target entity is operated,
- a predefined event related to the target entity has occurred (e.g. birthday, scheduled conference call),
- a communications history of the target entity exhibits a predefined profile (e.g. communications with a specific party, communications with a specific group/type of party [e.g. users belonging to a group, end user units of a particular type], communications of a specific data type [e.g. voice and/or video], communications for a specific period of time, lack of communications for a specific period of time, communications frequency etc.),
- the communications offering entity is operated,
- at least one end user unit associated to the communications offering entity is operated,
- a predefined event related to the communications offering entity has occurred (e. g. communications offering entity is put into operation, communications offering entity is (not) communicating for a specific period of time, communications frequency exceeds a given threshold etc.), and
- a communications history of the communications offering entity exhibits a predefined profile.

In a preferred embodiment, the method includes using building means to implement the communications parameter. This can facilitate the implementation of the communications parameters in the communications offering means.

Such building means can be provided in form of a software application. This embodiment can be used when communications offering means templates are used, which are communications offering means without implemented communications parameters.

As alternative or in addition, the building means may also be designed such that the communications offering means or a respective template can be generated by using the building means.

This embodiment can be employed, for example, if the communications offering means as such (i. e. with no communications parameters implemented) or a respective template is not available or provided.

Preferably, building means is associated to the communications offering entity. This allows an enhanced optimized personal and individual set-up of the communications offering means by the communications offering entity.

In a further embodiment, control means is used to control the communications offering means. Preferably, the control means is associated the communications offering entity.

The control means enables (e. g. the communications offering entity), for example, to vary the communications parameters, to control the communications offering means, to ascertain synchronization, for example by an interface via which the communications offering means can communicate with control means or the communications offering entity, respectively.

The building means and the control means can be provided in integrated manner or as separate means.

An integrated version can be, for example, used by the communications offering entity and/or associated thereto. A separated version can be, for example, used such that the building means is used by the communications offering entity while the control means is used by an entity, which has ordered, instructed etc. the communications offering entity to provide the communications offering means to the target entity and/or or is paying for communications carried out in response to communications offer.

Another possible feature is that the communications offering means provides the target entity with a representation of the communications offering entity.

Such a representation can include graphics, text, icons, logos, video, sound, speech etc. in order to inform the target entity or a user thereof, respectively, about the communications offering entity. Such information can comprise information concerning communications with the communications offering entity (e.g. the name, the telephone number, e-mail address, IP address, postal address etc. of the communications offering entity), the field of the communications offering entity (e.g. products, services, etc.), commercial advertisements of the communications offering entity etc. It is preferred that the representation of the communications offering entity is employed during periods the communications offering means is not in the above idle operational status. Nevertheless, it is possible that the communications offering means being in the above idle operational status can provide such a representation.

Preferably, the communications offering means communicates with a further communications offering means provided to the target entity by a further communications offering entity.

Such an embodiment allows that at least two communications offering means can be linked.

However, this embodiment is preferably depending on the communications parameter, i.e. the communications offering entity has to agree that "its" communications offering means communicates with another communications offering means.

In another preferred embodiment of the present invention a method is provided wherein the communication between communications offering means COM, COM' is enabled in case the communications offering means COM, COM' are stored in a specific group, especially directory. Two or more communications offering means COM, COM', COM", ... can preferably be "brought in contact" by the target entity. Thereby, the target entity may decide, which communications offering means COM are to communicate with each other. Further, the target entity TE may decide in what context this communications is to take place. For instance, on the target entity TE a specific directory may be provided, in which communications offering means can be moved. Communication offering means found in this specific directory may communicate with each other with respect to hobbies and personal data information of their respective communication offering entities. In a further directory, the target entity may move communication offering means where these communication offering means start to communicate by exchanging data on business related information and communicate this sort of information to there respective communication entities. Thus, the target entity may decide which communication offering means are to communicate to what extent. Instead of a specific directory, the target entity may choose to otherwise group the different communication offering means. Preferably, a specific application is provided, which allows grouping of communication offering means, especially in a container generated by this application.

Here, it is preferred that the communications offering means and the further communications offering means communicate such that the communications offering means provides at least one of the communications parameters to the further communications offering means.

It is also or alternatively possible that the further communications offering means provides at least one of its communications parameters to the communications offering means.

Communications between at least two communications offering means enables to exchange information on different communications offering entities and to contact different and/or new communications offering entities.

In a preferred embodiment, the communications offering means provides information provided by the further communications offering means to the communications offering entity, and/or the further communications offering means provides information provided by the communications offering means to the communications offering entity, to which the further communications offering means is associated to.

This embodiment makes it possible that communications offering entities, which do not have "known" each other so far, can obtain information from the respective other communications offering entity. Information of a communications offering entity that can be provided to another communications offering entity may include personal information of a user of the communications offering entity.

The communications offering means preferably provides the information of the user of the communications offering entity by at least one of:
- a graphical user interface,
- an icon,
- text,
- alphanumerical characters,
- voice or speech reproduction,
- an image or picture,
- a video,
- graphics,
- a data transfer to a server system associated to the communications offering entity,
- etc.

For example, the communication offering means provides this information as data to a data base or a server system associated to the communications offering entity and a contact manager in this data base may open a window to the user of a communications offering entity displaying the updated data offered by the communications offering means. The user of the communications offering entity may then be in a position to decide whether this updated information shall be maintained in the data base or replaced by others. Thus, the user of the communications offering entity is in a position to update data provided by the communications offering means with respect to the target entity and/or other communications entities or the users thereof, respectively.

The system according to the present invention comprises a communications offering entity being adapted to control a definition of communications parameters, a target entity being capable of communications, a communications offering means being assigned to the target entity and being at least partially provided to the target entity, and building means for implementing the communications parameters in the communications offering means, wherein the communications offering means being adapted to provide a communications offer to the target entity according to the communications parameters.

The building means is preferably adapted such that the building means can also be used to generate the communications offering means.

In a preferred embodiment of the system, the building means is associated to the communications offering entity.

In a further preferred embodiment, at least one of the communications offering entity, the communications offering means and the building means is adapted to vary the implemented communications parameters.

The system can further comprise control means for controlling the communications offering means. Here, it is preferred that the control means is associated to the communications offering entity.

According to a preferred embodiment, the system as such is adapted to be operated according to the at least one of the embodiment according to the present invention.

Further features of the system according to the present invention correspond to above described method steps.

### Short description of the figures

In the following description of preferred embodiments of the present invention it is referred to the accompanying schematically drawings wherein:
- Fig. 1: illustrates the principle of the present invention,
- Figs. 2 to 4: illustrate embodiments of the communications offering entity according to the present invention,
- Figs. 5 to 7: illustrate embodiments of the communications offering means according to the present invention,
- Fig. 8 and 9: illustrate embodiments of the target entity according to the present invention,
- Fig. 10: illustrates an embodiment of the environment according to the present invention,
- Fig. 11: illustrates an embodiment of the address means according to the present invention,
- Fig. 12: illustrates an embodiment of the building means according to the present invention,
- Fig. 13: illustrates an embodiment of the assigning step of the method according to the present invention,
- Fig. 14: illustrates an embodiment of the communications offering means according to the present invention,
- Fig. 15: illustrates an embodiment of a graphical user interface according to the present invention integrating an embodiment of the communications offering means according to the present invention,
- Fig. 16: illustrates an embodiment of the control means according to the present invention, and
- Figs. 17A to 17C: illustrate an embodiment of the steps of the method according to the present invention for communications between communications offering means according to the present invention.

### Description of preferred embodiments

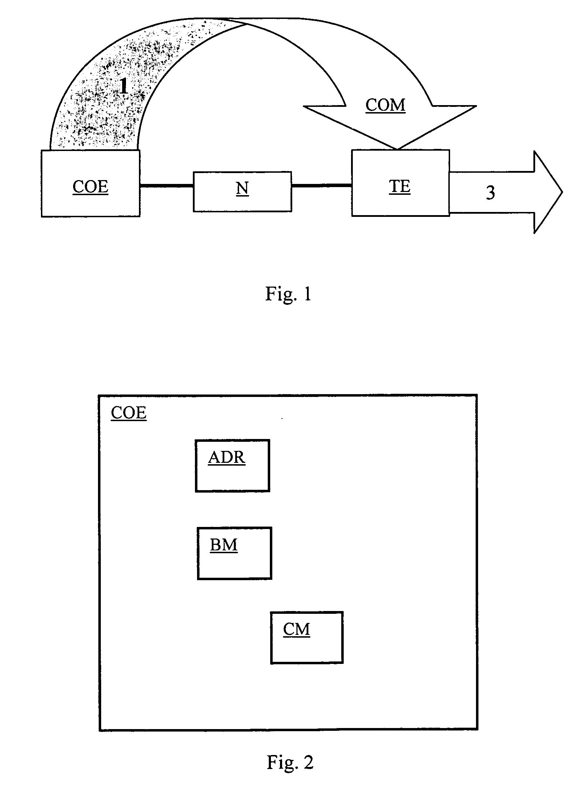

As schematically illustrated the principle underline the present invention. A communications offering entity COE intends that a target entity TE shall be provided an offer, which enables target entity TE to carry out communications in line with communications parameters defined by communications offering entity COE. For that purpose, the communications offering entity COE assigns a communications offering means COM to the target entity TE. This assignment of communications offering means COM to target entity TE is illustrated in Fig. 1 by arrow 1. Technically, assignment of communications offering means COM to target entity TE can be accomplished by transmitting at least a part of communications offering means COM via a network N to target entity TE.

Network N includes at least one network allowing communications between communications offering entity COE and target entity TE. Examples for network N include computer networks of the Internet, stationary and/or mobile telephone networks and the like.

When communications offering means COM is assigned to target entity TE, target entity TE can be provided a communications offer according to communications parameter implemented in communications offering means COM.

Upon provision of the communications offer, target entity TE or a user (not shown) of target entity TE can communicate in line with the communications parameters; such communications is illustrated in Fig. 1 by arrow 3.

As illustrated in Fig. 2, communications offering entity COE comprises address means ADR, building means BM and control means CM. Address means ADR include information, on the basis of which entities can be identified. Such information include names, addresses, e-mail addresses, telephone numbers, facsimile numbers, numbers of SMS devices and the like. Address means ADR can be used by communications offering entity COE for different purposes, but one will be explained here with regards to defining a communications offering means COM to target entity TE.

For defining communications offering means COM, communications offering entity COE initially selects information provided by address means ADR that indicate an entity that communications offering entity COE selected as target entity TE. Then, communications offering entity COE utilizes building means BM to create communications offering means COM. Creating communications offering means COM includes at least an implementation of information identifying target entity TE such that the created communications offering means is uniquely assigned to target entity TE.

In case communications offering entity COE intends to utilize a standardized communications offering means, building means BM can provide a template or the like of a communications offering means, which comprises, as previously implemented parameters, standardized communications parameters. By implementing information characterizing target entity TE, personalized communications offering means COM is created. However, communications offering entity COE is assumed to normally not intend to employ given communications parameters. In order to implement communications parameters desired by the communications offering entity to be included in communications offering means COM, building means BM provides functionalities for defining and implementing communications parameters.

After being generated, communications offering means COM is assigned to target entity TE. It has to be noted that communications offering means COM, after its assignments to target entity TE, can be still controlled by communications offering entity COE. With respect to communications parameters, building means BM allows to modify and vary implemented communications parameters and/or to implement additional and/or new communications parameters and/or to delete previously implemented communications parameters even if communications offering means COM is already assigned to target entity TE.

Control of communications offering means COM can be accomplished by control means CM. As compared to building means BM, control means CM allows controlling a current operational condition and/or behavior of communications offering means COM. Control by control means CM has no impact on the implemented communications parameters and will be limited to boundaries given by the implemented communications parameters.

In order to promote the understanding of differences between building means BM and communications means CM, reference is made to the following example. A person (communications offering entity) constructing models (communications offering means), such as model airplanes or cars, has a workshop (building means), in which a desired model (personalized communications offering means) is constructed and can be modified later. For defining properties and modifying the properties of the model, the person can select from a plurality of components of the workshop. Having decided on the properties (communications parameters) of the model such as the property "flying" of a model airplane, the person can still carry out modifications using the workshop. During operation, the user can control the model by a remote control (control means). However, control by the remote control is somehow limited by the properties (communications parameters) of the model (communications offering means). For example, remote control of a model airplane allows a plurality of flight figures, which are limited to the properties of the model airplane. For example, remote control of the model airplane cannot effect the model airplane to operate as model ship.

Embodiments of the communications offering entity COE shown in Fig. 2 actually comprises address means ADR, building means BM and control means CM. However, it can be sufficient that at least one of address means ADR, building means BM and control means CM are associated to communications offering entity.

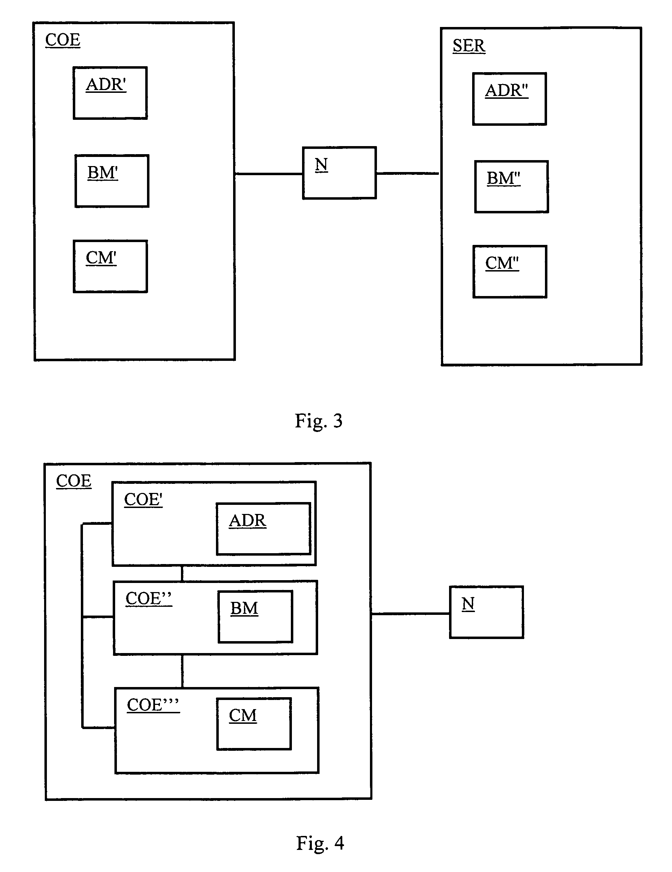

Fig. 3 illustrates an embodiment of communications offering entity COE wherein address means ADR, building means BM and control means CM are assigned to communications offering entity. Associating in this context indicates that communications offering entity COE or a user thereof can utilize functions of address means ADR, building means BM and control means CM while these means as such are not comprised in a communications offering entity COE.

For example, address means ADR can be designed such that a unit ADR' of address means ADR is comprised by communications offering entity COE while the remaining portion ADR" of address means ADR is comprised by a central computer system SER (e.g. a server of a network operator of network N). In order to provide functionalities of address means ADR to communications offering entity COE, address means unit ADR' at least includes a front end of address means ADR. For example, in case address means ADR is used in combination with a computer system, address means unit ADR' can include a graphical user interface providing functions of address means ADR, such as information on functionalities, slideable buttons and the like.

The address means unit ADR" can include hardware and/or software, which form - in combination with address means unit ADR' - address means ADR. Address means unit ADR" can include, for example, hardware for communications with and/or control of address means unit ADR' information concerning entities as set forth above (e.g. address information of a target entity TE), hardware and/or software for providing a graphical user interface, hardware and/or software for providing interactivity of address means unit ADR' and the like.

The above observations operation concerning address means ADR and its units ADR' and ADR" correspondingly apply to building means BM and control means CM and their unit BM' and BM" and CM' and CM", respectively.

The communications offering entity COE can be a single, self contained, stand-alone communications unit, such as a personal computer, a stationary telephone, a mobile telephone, a possible computer system and the like. However, communications offering entity COE can comprise two or more communications units such as illustrated in Fig. 4. In the shown exemplary embodiment of communications offering entity COE communications offering entity unit COE', COE" and COE''' are included. For example, communications offering entity unit COE' can be a personal organizer including address means ADR, while communications offering entity units COE" can be a personal computer including building means BM and communications offering entity unit COE''' can be a portable communications device (e.g. portable computer or telephone) including control means CM. In contrast to the illustrated embodiments of communications offering entity COE, embodiments (not shown) are contemplated that include two communications offering entity units, which comprise all together address means ADR, building means BM and control means CM, or include four or more communications offering entity units, of which some may include at least one of the address means ADR, building means BM and control means CM in redundancy.

Operation of communications offering entity COE can be accomplished for the embodiment shown in Fig. 4 by communications or transmission(s) of respective information and/or data between communications offering units COE', COE" and COE'''. Such communications or transmission(s) can be carried out between these communications offering units via network N and/or via communications link (s) between these units. Communications links between communications offering entity units COE', COE" and COE''' can be in form of hardwired links, wireless radio signal links, infrared communications links and links based on Bluetooth technology.

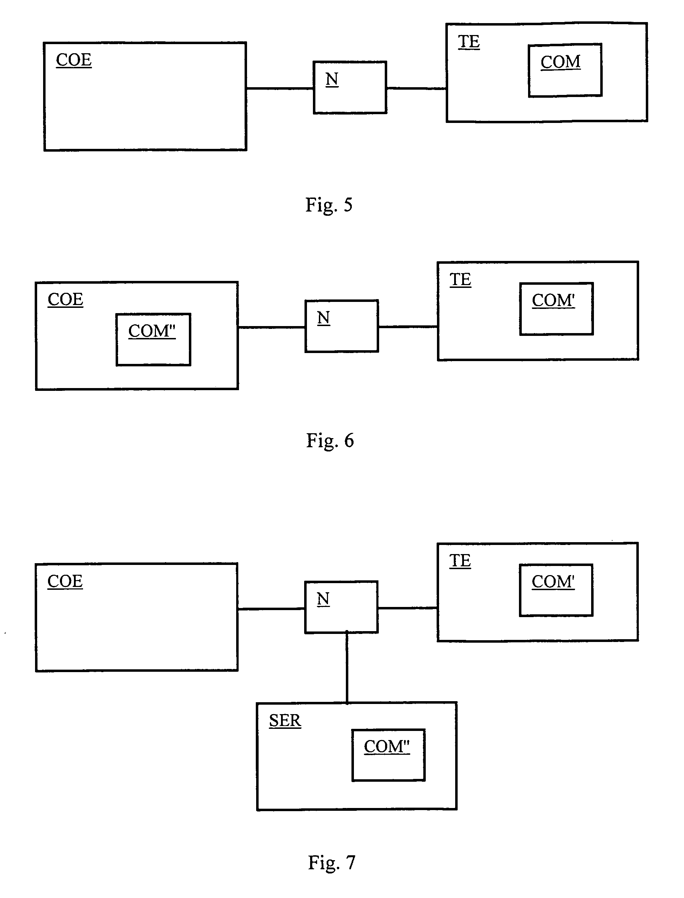

Assignment of communications offering means COM to target entity TE can be accomplished such that, as illustrated in Fig. 5, communications offering means COM is transferred to target entity TE. As a result, target entity TE comprises communications offering means COM.

Figs. 6 and 7 illustrate embodiments wherein communications offering means COM are not comprised by target entity TE. In these embodiments, target entity TE comprises a part COM' of the communications offering means COM, which forms the communications offering means COM in combination with COM", a second part of the communication offering means that is comprised by communications offering entity COE or central system SER.

Thus, is possible to have a part of the communication offering means COM" on a server SER, for instance building part of the database. Thus, the communication offering means COM as a combination of COM 'and COM " may use the resources on the server and therefore can be connected to data which is not available on the target entity TE.

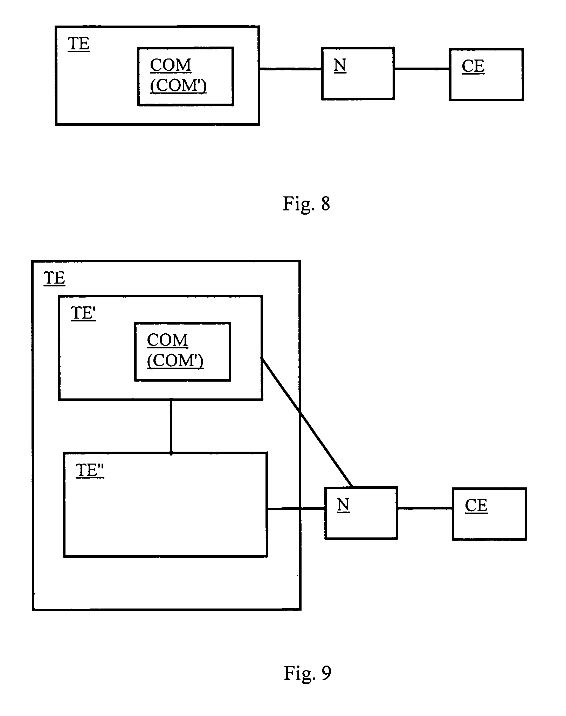

As illustrated in Fig. 8, target entity TE can be in form of a single, stand-alone communications device such as a personal computer, a mobile or stationary telephone etc. Then, a communications offer is provided by communications offering means COM or a part COM' of communications offering means COM (e. g. communications offering means front end) to target entity TE as such and a user thereof, respectively. A communications offer provided by communications offering means COM (COM') can be accomplished by means of an icon displayed on a desktop of a computer system being target entity TE, an entry in a address list of a telephone being target entity TE etc.

Activating such an icon or address entry, for example by clicking thereon, communications in response to the communications offer are possible with a called entity CE through network N. Communications constraints as defined by communications parameters implemented in communications offering means COM can specify a communications offer, for example, as communication with a specific entity (e.g. the communications offering entity COE, a service provider etc.), specific types of communications links, data types, duration etc.

Target entity TE can however comprise two or more units as illustrated in Fig. 9. Here, communications offering means COM is assigned to target entity TE by assignment to target entity unit TE'. Activation of communications offering means COM can effect that a communications offer is provided by utilizing target entity unit TE". For example, target entity unit TE' can be a computer system, which comprises communications offering means COM or communications offering means front end COM'. For providing a communications offer, communications offering means COM (COM') establishes a communications link to target entity unit TE" such as a mobile telephone or a mobile computer system. Such a communications link between target entity units TE' and TE" can be established directly between these units (e.g. via a hardwired or wireless link) or indirectly via network N.

Assuming communications offering means COM (COM') provides a communications offer in form of a free telephone call or a free SMS to target entity TE. For that purpose, communications offering means COM (COM') can provide target entity unit TE" by respective information or data such that operating target entity unit TE" allows to employ the offered communications. For example, communications offering means COM (COM') can transmit a telephone number to target entity unit TE' enabling a telephone call originating from target entity unit TE" free of charge for target entity TE to any called entity CE. To establish such telephone connection it is also possible that communications offering means COM (COM') establishes, via network N, a telephone link to target entity TE" and a telephone link to called entity CE and links these telephone links such that communications between target entity unit TE" and calls entity CE is possible.

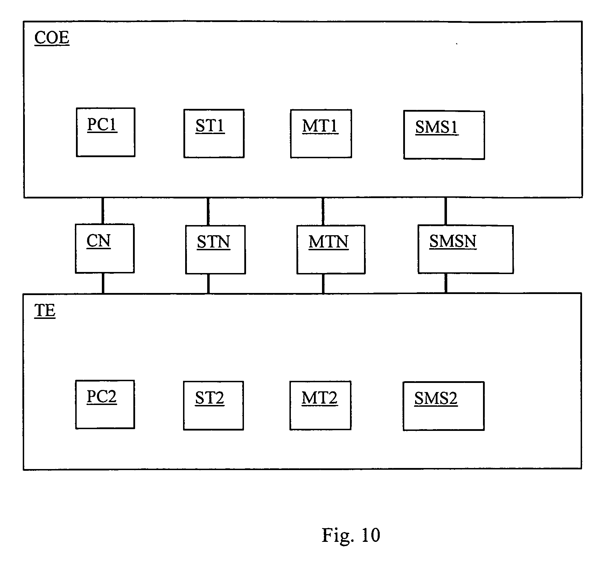

Fig. 10 illustrates an embodiment, wherein communications offering entity COE comprises a personal computer PC1, a stationary telephone ST1, a mobile telephone MT1 and an SMS capable unit SMS 1. Each of these components of communications offering entity COE can be used to generate a communications offering means (not shown) and to assign the same to target entity TE. Depending on the unit of communications offering entity COE used for generating and/or assigning a communications offering means to target entity TE, a suitable network can be used. Fig. 10 exemplarily illustrates a computer network CN, a stationary telephone network STN, a mobile telephone network MTN and a SMS capable network SMSN.

Depending, for example, on the type of communications offering means assigned from communications offering entity to target entity TE and/or a type of communications offer intended to be provided a personal computer PC2, a stationary telephone ST2, a mobile telephone MT2 or an SMS capable device SMS2 of target entity TE can be used.

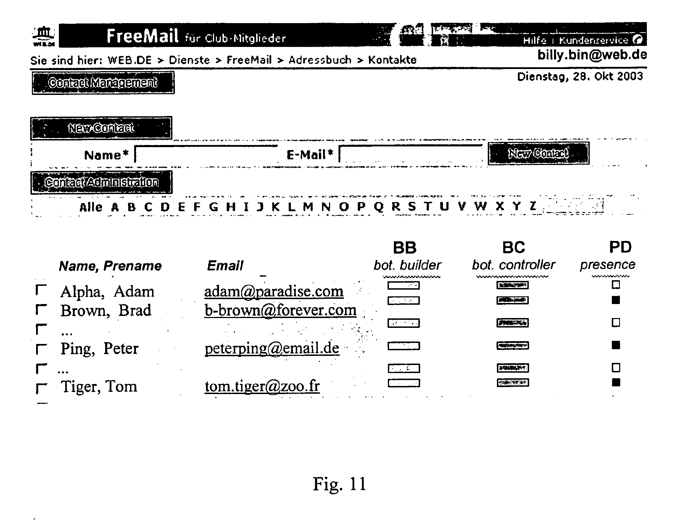

Referring to Figs. 11 to 18, embodiments are described for which it is assumed that both communications entity COE and target entity TE are computer systems, that network N is the Internet and that communications offering means COM is assigned by an E-Mail from communications offering entity COE to target entity TE.

Fig. 11 illustrates a graphical user interface or front end of address means ADR presented on a display of communications offering entity COE. The illustrated graphical user interface of address means ADR presents, to a user of a communications offering entity COE, name and address information of communications devices and/or individuals in order to choose one thereof as target entity TE.

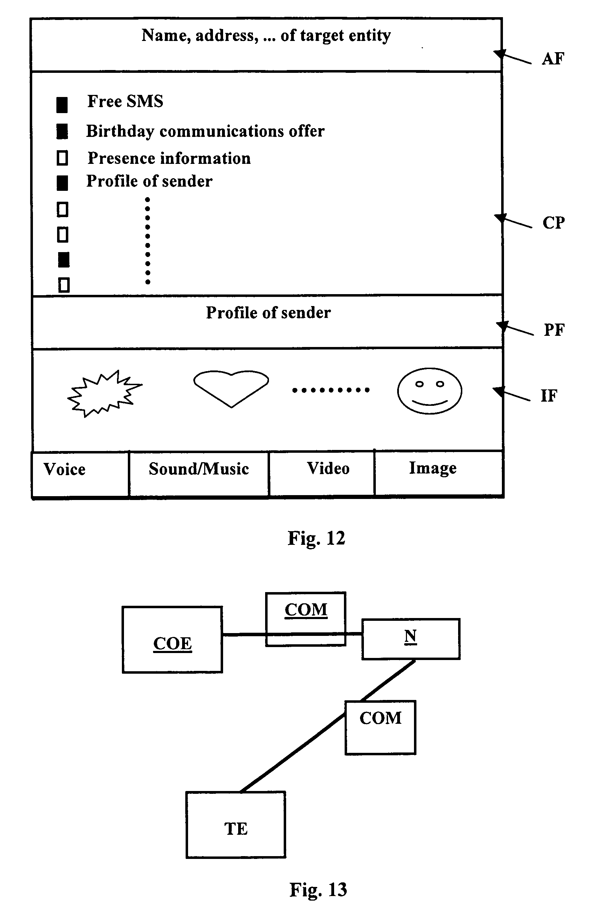

In order to create a communications offering means COM, a respective one of interactive buttons Bot Builder ( BB ) has to be operated. Operating one of the buttons BB will lead to a graphical user interface or front end of building means BM, which will be explained in detail with reference to Fig. 12.

In case one or more of the displayed communications devices and/or individuals has been previously selected as target entity and has been provided a communications offering means by assignments, it is possible to display information that such communications devices and/or individuals are "online". In Fig. 11, such an indication is provided by field PD (for Presence Display). For example by using different colors, field PD can indicate online presence of an entity to which a communications offering means has been assigned.

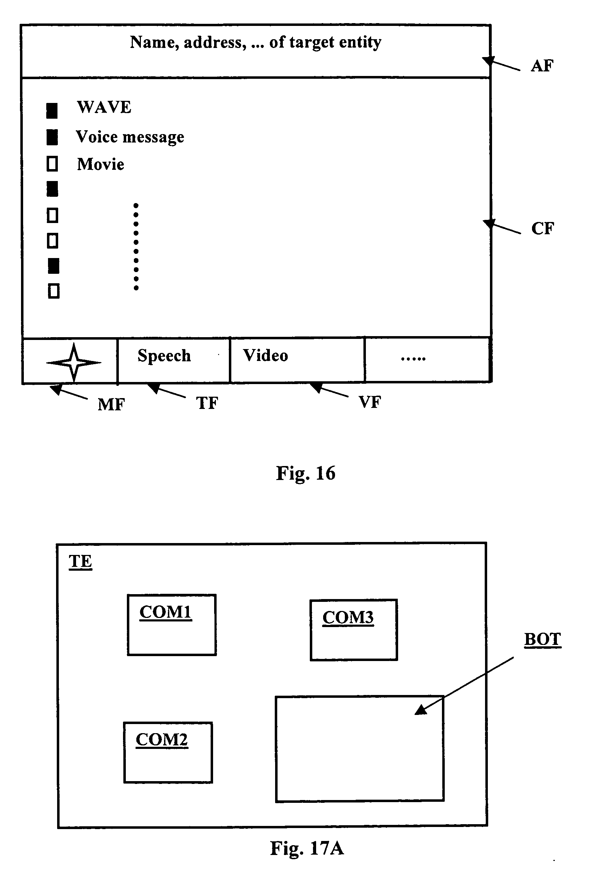

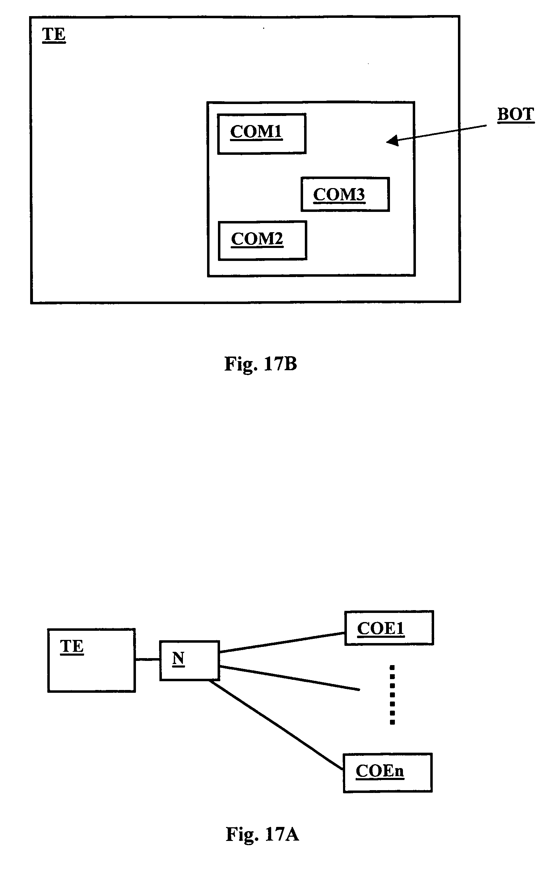

The graphical user interface of address means ADR also provides an interactive portion Bot Controller (BC) that leads to a graphical user interface or front end of control means CM (see Fig. 17). Interactive portions of graphical user interface ADR are only operable for those listed entity, to which communications offering means has(have) been assigned; without any communications offering means assigned to an entity, using control means CM would not allow to control any communications offering means since there is no communications offering means to control.

Having selected an entity as target entity TE, the display of communications offering entity COE displays a graphical user interface or front end of building means BM in response to an operation of a respective interactive button BB. Fig. 12 illustrates an example of a graphical user interface of building means BM.

In address field AF of the graphical user interface of building means BM, address, name and the like of the target entity is displayed. As an option, this graphical user interface comprises a profile field PF, in which the profile of the communications offering entity or the user thereof, respectively, is displayed. A profile of the communications offering entity COE or its user, respectively, can include address information, the user name, a telephone number, an e-mail address, personal information (e.g. age, sex, profession) and the like. Profile field PF will be included in the graphical user interface of building means BM in case the communications offering means COM shall include a profile of the communications offering entity COE or the user respectively. If the communications offering means shall not include such a profile, profile field PF is not displayed or displayed without information contained therein. To select one of these options, a respective communications parameter is implemented in communications offering means COM.

Implementing communications parameter in communications offering means COM is accomplished by utilizing communications parameters field CP of graphical user interface of building means BM. Communications parameters field CP provide a list of communications parameters, which can be implemented in communications offering means COM.

It is possible, for example, to implement communications parameter in communications offering means COM such that the communications offer comprises free SMSs for target entity TE. This can be obtained by selecting communications parameter "Free SMS" and indicating the number of free SMSs to be offered by target entity TE.

Communications parameter "Birthday communications offer" allows to design communications offering means COM such that a communications offer is provided to target entity on the birthday of its user.

Communications parameter "Presence information" enables address means ADR to indicate whether target entity TE is online (see Fig. 1).

Communications parameter "Profile of sender" indicates that the communications offering means COM shall comprise a profile of communications offering entity or its user, respectively.

Icon field IF of the graphical user interface of building means BM provides a selection of different icons, which will be used as graphical representation of the communications offering means COM are displayed of target entity TE.

In the bottom portion of the graphical user interface of building means BM, interactive fields "Voice ", "Sound/Music", "Video" and "Image" are provided.

Field "Voice" allows to implement a voice message or speech data (e.g. of a user of communications offering entity COE, prerecorded/stored messages/data) into communications offering means COM.

Field "Sound/Music" allows to implement a sound (e. g. bell ring) and/or music (e .g. latest song of ...) into communications offering means COM. Sound and/or music to be implemented can be provided by user of communications offering entity COE (e. g. transferring sound/music data into communications offering means COM) and/or a part of building means (e. g. stored in a memory included in or associated to building means) and/or by a third party in the network N.

Thus, it is possible to use different sources for the files to be implemented, especially even sources in the network offered by a third party. Thus, use can be made of widely spread databases and files serving as a source for the different files to be implemented.

Field "Video" allows to implement a Video (e. g. views of the last trip to ..., video clips etc.) into communications offering means COM. Video to be implemented can be provided by user of communications offering entity COE (e. g. transferring video data into communications offering means COM) and/or a part of building means (e. g. stored in a memory included in or associated to building means) and/or by a third party in the network N.

Field "Image" allows to implement at least one image (e. g. pictures of holidays in ..., picture of grandmother) into communications offering means COM. Images to be implemented can be provided by user of communications offering entity COE (e. g. transferring image data into communications offering means COM) and/or a part of building means (e. g. stored in a memory included in or associated to building means) and/or by a third party in the network N.

Implemented voice, sound, music, video and image data can be used to reproduce respective acoustical and/or visual information in, e. g., the following cases:
- Upon providing of the communications offering means COM to target entity TE in order to inform target entity TE that the communications offering means COM is now assigned.
- During operation of the communications offering means COM in order to inform target entity TE that the communications offering means COM is operating or active.
- For providing a communications offer in order to attract attention.
- To indicate that the communications offering means COM is currently controlled.
- To indicate that communications parameters are and/or have been varied.

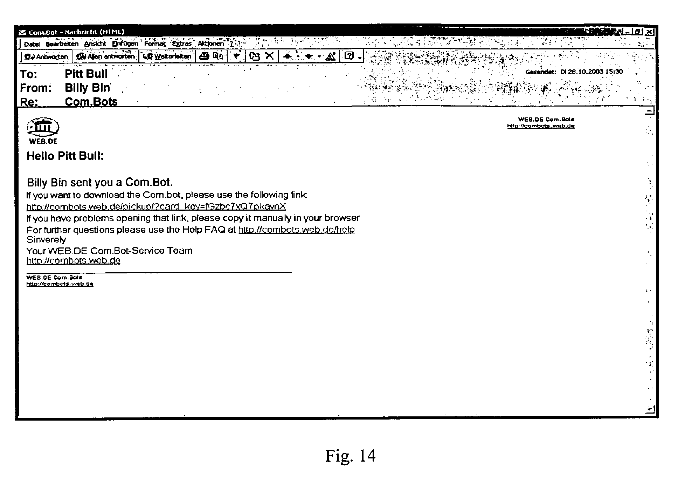

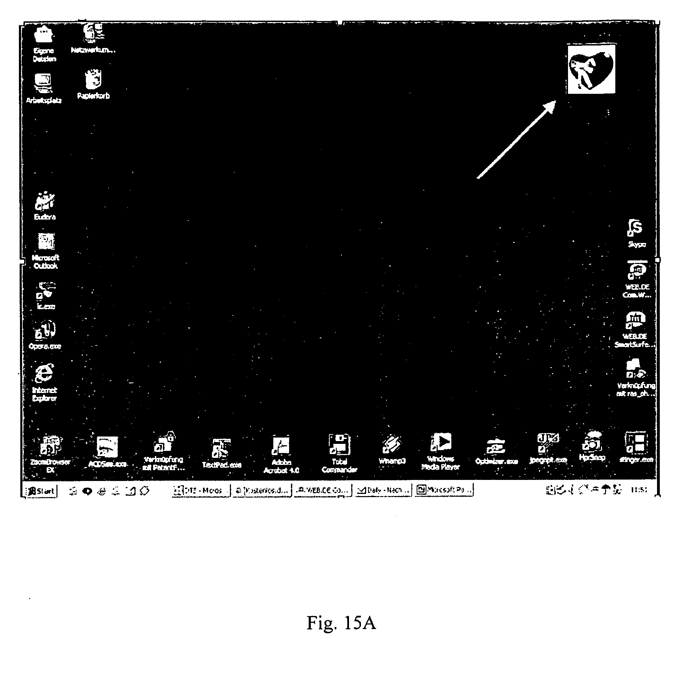

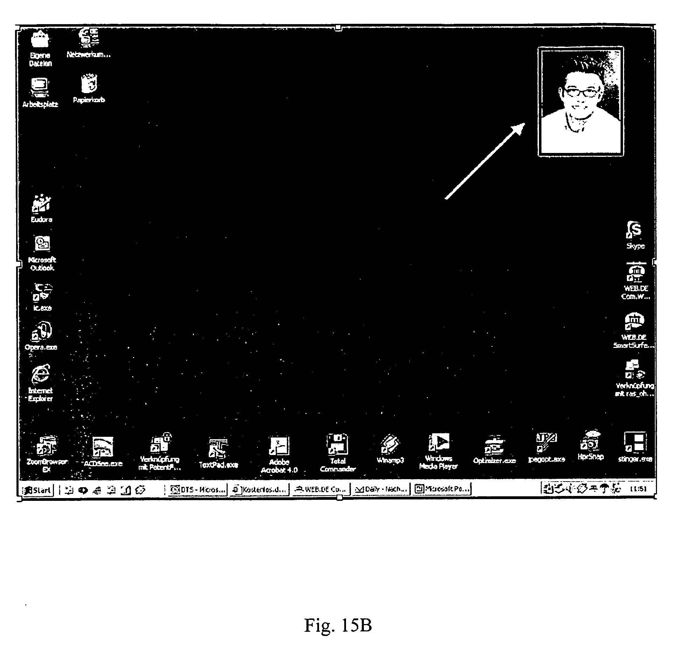

Having generated the communications offering means COM, the communications offering entity COE provides at least a part of the communications offering means COM by transmitting at least a part of the communications offering means COM via network N to target entity TE (see Fig. 13). For that purpose, an e-mail can be used, which comprises data/information/software forming the communications offering means (see Fig. 14). Having received the communications offering means COM, an icon or picture selected for communications offering means is shown in display of target entity TE (see Fig. 15A/B).

Having provided the communications offering means COM to target entity TE, it is possible to control communications offering means COM by means of control means CM. Referring to Fig. 11, interactive field BC associated to target entity TE is operated. As a result, a graphical user interface or front end of control means CM is presented to the communications offering entity COE (see Fig. 16).

In address field AF of the graphical user interface of control means CM, information identifying target entity TE are displayed. Control field CF of the graphical user interface of control means CM displays a plurality of options for controlling communications offering means COM. For example, control option "Wave" effects that an icon used to represent communications offering means COM on a display of target entity TE waves or a respective icon is selected to behave in a comparable manner. Control option "Voice message" can be used to reproduce predefined voice messages or voice messages inputted by a user of communications offering entity COE towards a user of target entity TE. Control option "Movie" effects that a predefined video sequence or a video sequence or movie inputted by a user of communications offering entity is presented to a user of target entity TE.

In motion field MF of the graphical user interface of control means CM interactive buttons or icons are presented, which allow a user of a communications offering entity COE to move an icon used for communications offering means COM over the desktop of target entity TE. Talk field TF of the graphical user interface of control means CM enable a user of communications offering entity COE to directly talk to a user of a target entity TE. By operating video field VF of the graphical user interface of control means CM, a life video, for example, captured a video camera of a user of communications offering entity COE, can be directly transmitted to target entity TE.

Fig. 17A to Fig. 17C illustrate an embodiment which is referred to as "Botarium" (following the term aquarium indicating a container including fishes) to indicate a measure to "confine" two or more communications offering means (communications robots or ComBots).

Assuming, three communications offering means COM1, COM 2, COM3 assigned to target entity TE, Fig. 17A illustrates a view of a display of target entity TE including graphical representations of these communications offering means. Fig. 17A further illustrates a portion or window of target entity TE indicated by reference numeral BOT. This window BOT is graphical representation of the "Botarium" of target entity TE. This window may be a specific directory or the ComBots in this window may be members of a group by labeling the ComBots of this container of the "Botarium".

In order to effect communications between communications offering means COM1, COM2 and COM3, these communications offering means is placed, moved or copied into the Botarium BOT (e. g. by a drag-and-drop operation) as shown in Fig. 17B. Being "confined" in Botarium BOT, the communications offering means will recognize this condition and exchange information respectively implemented therein. Particularly, the communications offering means COM1, COM2 and COM3 exchange profiles of communications offering entities, from which they originate.

Having exchanged information, each communications offering means COM1, COM2 and COM3 communicates the newly received information to its respectively associated communications offering entity (see Fig. 17C),. Such a communications can also be initiated by a respective communications offering entity by suitably controlling the associated communications offering means. Then, as illustrated in Fig. 17C, the concerned communications offering entities COE1, ..., COEn are respectively provided with information/profiles of the other communications offering entities. As a result, each communications offering entity got to know at least one new communications offering entity and, thus, new contacts and relations can be established. In case communications offering means are server based (see Fig. 7), exchange of, e. g., profile information between communications offering means COM1, ..., COMn can also be carried out by respective data transmissions, data shifts (e. g. between different memory locations) etc. on the server(s) being involved.

## Claims

1. A method, comprising the steps of:
defining communications parameters under control of a communications offering entity, implementing the communications parameters in a communications offering means, assigning the communications offering means to a target entity,
providing at least a part of the communications offering means to the target entity, and
providing, by the communications offering means, a communications offer to the target entity to communicate according to the communications parameters.

2. The method according to claim 1, wherein the providing step includes transferring the at least part of the communications offering means to the target entity.

3. The method according to claim 1 or 2, wherein the providing step includes installing the at least part of the communications offering means at the target entity.

4. The method according to one of the preceding claims, wherein the providing step includes putting the communications offering means into an idle operational status.

5. The method according to one of the preceding claims, wherein the at least part of the communications offering means is provided by means of an electronic message or by means of a portable data storage.

6. The method according to one of the preceding claims, wherein the at least part of the communications offering means is provided in a manner uncontrolled by the target entity.

7. The method according to one of the preceding claims, wherein the communications parameters are varied by implementing varied communications parameters in the communications offering means.

8. The method according to one of the preceding claims, comprising at least one of the steps:
- the communications offering means is controlled when the at least part of the communications offering means has been provided so as to control a current condition of the communications offering means;
- the communications offering means is controlled when the at least part of the communications offering means has been provided so as to control a current condition of the communications offering means using a control means associated to the communications offering entity;
- the communications offering means is controlled when the at least part of the communications offering means has been provided so as to control a current condition of the communications offering means in dependence of at least one event related to at least one of the communications offering entity and the target entity;
- the communications offering means is controlled when the at least part of the communications offering means has been provided so as to control a current condition of the communications offering means in dependence of at least one condition related to at least one of the communications offering entity and the target entity.

9. The method according to one of the preceding claims, wherein the providing of the communications offer is performed in dependence of at least one of a condition of the target entity and/or a condition of the communications offering entity.

10. The method according to any of the preceding claims, wherein the communications offering means is synchronized with respect to at least one of a condition of the target entity and a condition of the communications offering entity.

11. The method according to one of the preceding claims, wherein
- the communications offering means provides information of a condition of the target entity to the communications offering entity, and/or
- the communications offering means provides information of a condition of the communications offering entity to the target entity.

12. The method according to one of the preceding claims, wherein
- the communications parameters are implemented in the communications offering means by using a building means, or
- the communications offering means is generated by using building means, or
- the communications offering means is generated by using building means and the communications parameters are implemented in the communications offering means by using the building means.

13. The method according to one of the preceding claims, wherein
the communications offering means is controlled by means of a control means associated to the communications offering entity.

14. The method according to one of the preceding claims, wherein the communications offering means provides a representation of the communications offering entity at least during a period the communications offering means is activated.

15. The method according to one of the preceding claim, wherein the communications offering means communicates with a further communications offering means provided to the target entity by a further communications offering entity.

16. The method according to claim 15 wherein the communication between the communications offering means COM, COM' is enabled in case the communication offering means COM, COM' are stored in a specific group, in particular a directory.

17. The method according to claim 15 or 16, wherein
- the communications offering means provides at least one of the communications parameters to the further communications offering means, and/or
- the further communications offering means provides at least one of its communications parameters to the communications offering means.

18. The method according to any of claims 15 to 17, wherein
- the communications offering means provides information of the communications offering entity to the further communications offering means, and/or
- the further communications offering means provides information of a communications offering entity, to which the further communications offering means is associated to, to the communications offering means.

19. The method according to any of claims 15 to 18, wherein
- the communications offering means provides information provided by the further communications offering means to the communications offering entity, and/or
- the further communications offering means provides information provided by the communications offering means to the communications offering entity, to which the further communications offering means is associated to.

20. A system, comprising:
a communications offering entity being adapted to control a definition of communications parameters,
a target entity being capable of communicating in a network,
a communications offering means being assigned to target entity and being at least partially provided to the target entity,
building means for implementing the communications parameters in the communications offering means, and
the communications offering means being adapted to provide a communications offer to the target entity according to the communications parameters,

21. The system according to claim 20, wherein building means is for generating the communications offering means.

22. The system according to claim 20 or 21, wherein the building means is associated to the communications offering entity.

23. The system according to one of the claims 20 to 22, wherein at least one of the communications offering entity, the communications offering means and the building means is adapted to vary the implemented communications parameters.

24. The system according to one of the claims 20 to 23, comprising control means for controlling the communications offering means.
